# FASCICULE DE BREVET EUROPEEN

(11) **EP 0 558 774 B1**
(45) Date de publication et mention de la délivrance du brevet: **22.01.1997**
(21) Numéro de dépôt: 92103599.4
(22) Date de dépôt: 02.03.1992
(51) Int. Cl.: A23K 1/18, A23P 1/12, A21C 11/00, A21C 11/16

(54) **Procédé d'obtention d'un aliment pour chiens en forme d'os**
Verfahren zur Herstellung eines Knochenförmigen Hundefutters
Process for the preparation of a bone-shaped dog food

(43) Date de publication de la demande: 08.09.1993
(73) Titulaire: SOCIETE DES PRODUITS NESTLE S.A., 1800 Vevey (CH)
(72) Inventeur: Geromini, Oswaldo, F-80380 Villers Bretonneux (FR); Heck, Ernst, CH-1302 Vufflens la Ville (CH); Horisberger, Jean, CH-1024 Ecublens (CH)

(56) Documents cités:
- EP-A- 0 487 757
- US-A- 3 899 607
- US-A- 4 260 635
- US-A- 4 777 058
- US-A- 4 900 572

## Description

La présente invention est relative à un aliment pour chiens en forme d'os et à un procédé d'obtention de cet aliment.

La prédilection des chiens pour les os est bien connue. Par ailleurs un aliment pour chiens doit satisfaire à certaines exigences nutritives.

Différentes tentatives ont été faites pour proposer des aliments pour chiens pour satisfaire à cette double exigence de forme et de composition.

On connaît ainsi, par le document US 3 567 459, un procédé pour la réalisation par extrusion d'aliments pour chiens ressemblant à des os dans lequel une masse thermoplastique, constituée d'une pâte alimentaire aromatisée, est extrudée sous la forme d'un boudin cylindrique qui est ensuite transformé, par une technique non précisée, en un aliment ayant la forme d'un os.

Ce document, limité à la réalisation d'un produit ayant la forme externe d'un os réalisé en pâte alimentaire aromatisée, ne permet pas de réaliser un produit ayant l'aspect d'un os tout en satisfaisant aux exigences de qualités nutritives. En effet, le produit extrudé devant être thermoplastique, la pâte qui le constitue doit permettre cette propriété et ne peut donc facilement satisfaire en même temps à des exigences nutritives de composition qui iront à l'encontre de ce caractère thermoplastique. Par ailleurs, il est connu qu'il est impossible d'extruder une masse dont la teneur en matière grasse est supérieure à quelques pour-cent.

Or, il a été trouvé qu'un aliment pour chien en forme d'os constitué d'une enveloppe externe à base de céréales et d'une garniture interne quelconque permettait de satisfaire à cette double exigence de forme et de qualités nutritives, la forme étant obtenue grâce aux propriétés themoplastiques de l'enveloppe, les qualités nutritives résultant de la garniture. De plus, ce produit présentant à l'extérieur une texture croustillante et à l'intérieur une texture moelleuse, il est en lui même beaucoup plus appétissant pour le chien qu'un os extrudé selon l'art antérieur.

La présente invention a ainsi pour objet un procédé pour la réalisation d'un aliment pour chiens en forme d'os constitué d'une enveloppe externe en pâte alimentaire et d'une garniture interne quelconque.

Il a par ailleurs été trouvé que ce produit pouvait être réalisé par cuisson-coextrusion sous certaines conditions.

Par cuisson-coextrusion, on entend un procédé, tel que décrit par exemple dans le document US 3,480,445, dans lequel une enveloppe externe est extrudée sous pression avec une faible addition d'eau. Lors de cette opération, l'eau est vaporisée et l'enveloppe est cuite et, à la sortie de la filière d'extrusion, le produit cuit s'expanse. Dans le même temps, à l'intérieur de l'enveloppe, une garniture quelconque est coextrudée. Dans l'art antérieur, le produit est ensuite classiquement refroidi puis coupé en morceaux.

On connaît, par le document EP 178 878, un dispositif pour le découpage d' un boudin constitué d'une enveloppe externe en pâte alimentaire et d'une garniture interne quelconque. Selon ce document, une bande convoyeuse transporte le boudin, au moins un couteau étant disposé au-dessus de cette bande convoyeuse. Le couteau est animé d'un mouvement alternatif de haut en bas combiné à un mouvement longitudinal dans le sens d'avancée du produit à découper.

Mais, d'une part, ce document n'est pas relatif à un produit cuit et, d'autre part, il ne permet que de découper un boudin perpendiculairement à son axe.

Or, les produits cuits coextrudés ne peuvent être assimilés aux produits obtenus par simple coextrusion qui doivent être ensuite cuits pour donner un produit fini. En effet, les produits non cuits sont très déformables. Ainsi, la compression de la garniture, qui accompagne inévitablement le découpage, entraîne simplement un étirement de l'enveloppe qui permet à la dite garniture comprimée de trouver la place nécessaire. En revanche, les produits obtenus par cuisson-coextrusion conduisent directement à un produit fini. Ainsi, le caractère plastique d'un produit obtenu par un tel procédé est très limité et une compression de la garniture causée par un couteau ne peut être totalement compensée par un étirement de l'enveloppe qui ne peut être que faible.

Enfin, l'art antérieur ne permet pas de réaliser à partir d'un boudin coextrudé des produits de forme quelconque.

La présente invention a donc aussi pour but de résoudre ces problèmes en permettant de réaliser un aliment pour chiens en forme d'os obtenu par cuisson-coextrusion et constitué d'une enveloppe externe en pâte alimentaire et d'une garniture interne.

La présente invention a donc aussi pour objet un procédé pour la réalisation d'un aliment pour chiens en forme d'os dans lequel un boudin, constitué d'une enveloppe externe en pâte alimentaire à base de céréales et d'une garniture interne, est produit par cuisson-coextrusion puis, alors que l'enveloppe est encore thermoplastique, ledit boudin est découpé longitudinalement de telle manière que l'outil de coupe ne pénètre pas dans la garniture, le boudin étant par ailleurs découpé en segments perpendiculairement à sa longueur et simultanément moulé.

Grâce à cette découpe particulière, l'outil de coupe ne pénétrant pas dans la garniture lors de la découpe longitudinale du boudin mais seulement lors de la découpe perpendiculaire en segments, qui va individualiser les os, il est réalisé une compression minimale de cette garniture qui demeure donc à l'intérieur de son enveloppe sans avoir tendance à s'écouler hors de celle-ci.

D'autres caractéristiques et avantages ressortiront à la suite de la description qui va suivre faite en référence aux dessins annexés donnés seulement à titre d'exemples non limitatifs et parmi lesquels:
- La Fig. 1 représente une vue schématique en coupe partielle d'un os selon l'invention.
- La Fig. 2 représente une vue en perspective avec coupe d'un boudin cuit coextrudé avant découpe.
- La Fig. 3 représente une vue schématique d'un dispositif pour la mise en oeuvre du procédé selon l'invention.
- La Fig. 4 représente une vue de détail du dispositif illustré à la Fig. 3.
- La Fig. 5 représente une vue schématique illustrant la ligne de découpe d'un boudin coextrudé.

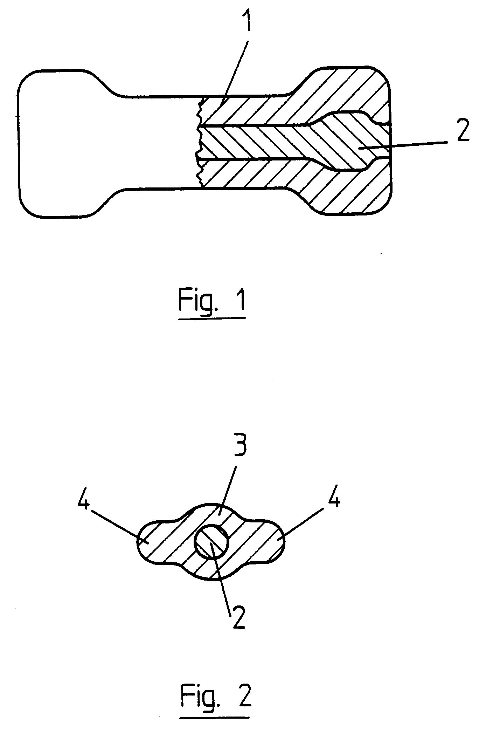

Comme on le voit à la Fig. 1 un os selon l'invention est constitué d'une enveloppe externe 1, en pâte alimentaire à base de céréales, et d'une garniture interne 2. Cet os a la forme d'un os long c'est à dire qu'il est constitué d'un corps tubulaire, correspondant à la diaphyse d'un os véritable, et qu'il présente à chacune de ses extrémités une tête, correspondant aux épiphyses d'un os véritable.

Le procédé pour réaliser ce produit consiste essentiellement à fabriquer, par cuisson-coextrusion, un boudin constitué d'une enveloppe externe à base de céréales et d'une garniture interne. Ensuite, alors que l'enveloppe externe est encore thermoplastique, le boudin est découpé et moulé pour former l'os.

Les propriétés thermoplastiques ne durant que quelques secondes après la sortie du dispositif de cuisson-coextrusion, l'opération de découpe doit intervenir dans ce court laps de temps. Ainsi, contrairement à l'art antérieur, la découpe est réalisée avant le refroidissement du produit et non après.

Un exemple de composition thermoplastique d'une enveloppe externe pourra être un mélange de farine de blé, de sucre et de sel, par exemple selon les proportions en poids suivantes :

| | |
|---|---|
| - farine | 89% |
| - sucre | 10% |
| - sel | 1% |

Ce mélange est additionné de 5% à 20% d'eau. En effet, dans les conditions habituelles de cuisson-coextrusion, à une pression d'environ 100 bar et à une température de l'ordre de 150°C, il a été trouvé que cette addition d'eau constituait un bon compromis entre l'expansion à la sortie de la filière d'extrusion et le caractère thermoplastique.

La garniture peut être constituée d'un mélange en poids de 70% de matières grasses, 20% de fibres, telles qu'un mélange de farine et de son, et 10% de sucre. Une autre composition peut par exemple être constituée d'un mélange en poids de 43% de matières grasses, 33% de sucre, 15% de fibres, 6% de viande et 3% d'additifs divers.

Selon un mode de réalisation principal de l'invention, le boudin, à la sortie du dispositif de cuisson-coextrusion, n'a pas une section circulaire. En effet, comme illustré Fig. 2, le boudin est constitué d'une enveloppe externe 1 présentant un corps central 3, de section circulaire ou elliptique, et deux appendices latéraux radialement opposés par rapport au corps central 3. Ainsi l'enveloppe externe 1 est constituée d'un corps central 3 et deux nervures latérales 4, le corps central 3 contenant la garniture 2.

Ensuite le boudin est découpé et moulé en segments ayant la forme d'os. Pour cela, le boudin est découpé longitudinalement sur ces flancs dans des zones où il n'y a pas de garniture, afin de donner le profil d'un os en formant le corps tubulaire et les deux têtes, de même le boudin est découpé perpendiculairement à sa longueur pour le découper en segments moulés en forme d'os.

Dans le cas où le boudin extrudé est de la forme décrite à la Fig. 2, le boudin est découpé longitudinalement dans ses nervures 4, dans le cas où le boudin extrudé est de section circulaire ou elliptique, par exemple suite à un aplatissement préalable, la découpe longitudinale est réalisée dans les flancs du boudin en évitant de pénétrer dans la garniture, il convient alors d'avoir une enveloppe d'une épaisseur suffisante.

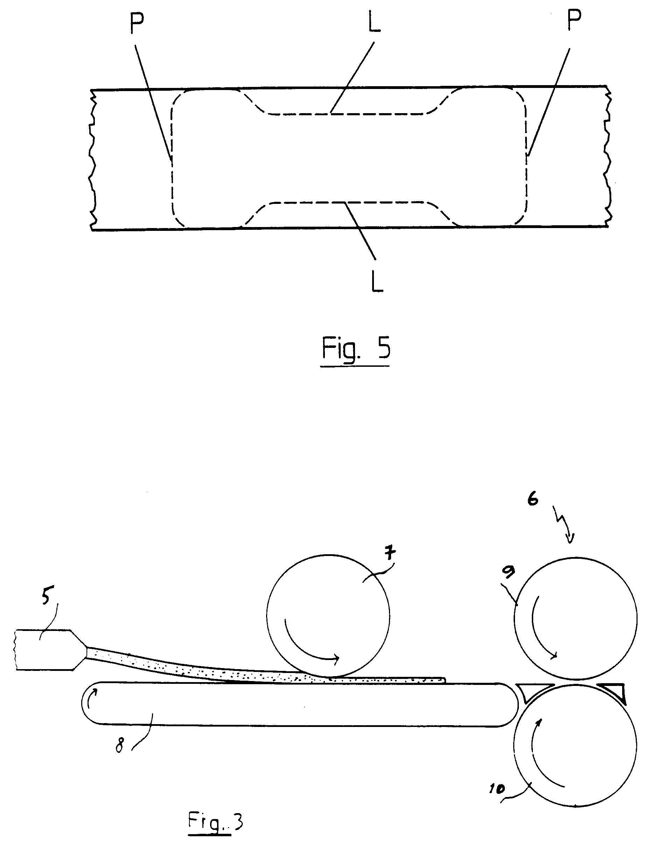

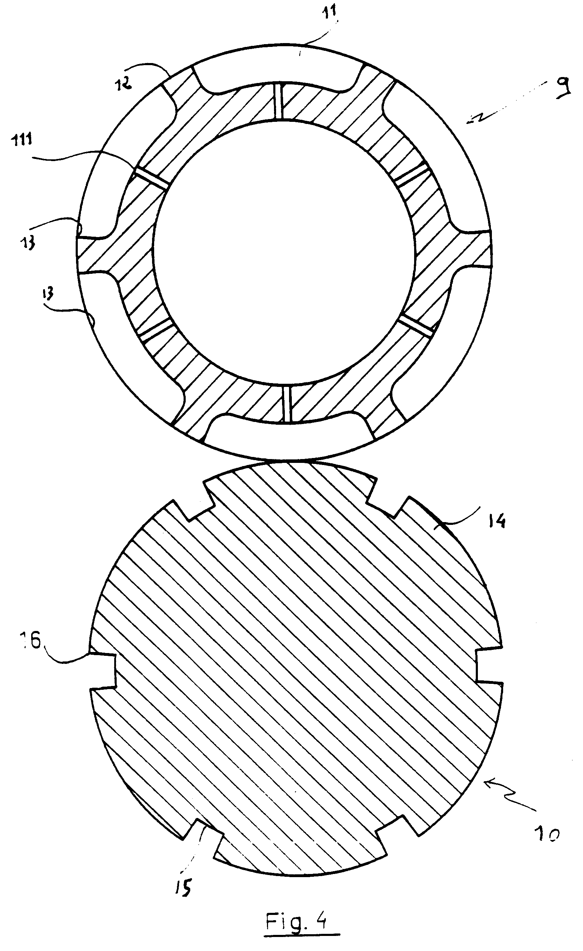

Pour la mise en oeuvre du procédé selon l'invention, il est utilisé un dispositif tel que décrit à la Fig. 3. Ce dispositif comprend un dispositif de cuisson-coextrusion 5, tel que par exemple décrit dans US 3,480,445, et un dispositif 6 de découpe du boudin obtenu. Entre le dispositif de cuisson-coextrusion 5 et le dispositif de découpe 6 peut être interposé un dispositif d'aplatissement 7 du boudin, par exemple constitué d'un cylindre mobile en rotation autour de son axe horizontal et perpendiculaire au sens d'avancement du boudin. Une bande transporteuse 8 peut être prévue pour acheminer le boudin du dispositif de cuisson-coextrusion 5 vers le dispositif de découpe 6.

Le dispositif de découpe 6 est constitué de deux cylindres 9 et 10 superposés, d'axes horizontaux parallèles perpendiculaires au sens d'avancement de la bande transporteuse 8.

Comme illustré à la Fig. 4, le cylindre supérieur 9 présente, régulièrement réparties à sa surface externe, des empreintes femelles 11 en creux, d'un profil correspondant à la forme du produit final c'est à dire constitué d'une partie médiane étroite et de deux extrémités élargies, écartées radialement les unes des autres et séparées par une surface 12 qui peut être une portion de cylindre, chaque empreinte femelle 11 étant limitée par une ligne d'arête 13 constituée par l'intersection de la surface 12 et de l'empreinte 11. Chaque empreinte femelle 11 présente un ou plusieurs orifices 111 reliés à une source de gaz sous pression non représentée.

Le cylindre inférieur 10 présente, régulièrement réparties à sa surface externe, des empreintes mâles 14, en relief, écartées radialement les unes des autres et séparées par une surface en creux 15. De même que chaque empreinte femelle 11, chaque empreinte mâle 14 présente une ligne d'arête 16. Cette ligne d'arête 16 est d'un profil correspondant à la ligne d'arête 13 de l'empreinte femelle 11 qui lui fait face, l'empreinte mâle, préférablement, pénétrant légèrement à l'intérieur de l'empreinte femelle.

Les deux cylindres 9 et 10 sont positionnés l'un par rapport à l'autre de telle manière qu'une empreinte mâle soit toujours en vis à vis avec une empreinte femelle, leurs lignes d'arêtes respectives étant ainsi en contact.

Il va maintenant être décrit le fonctionnement du dispositif selon le procédé de l'invention.

Un boudin constitué d'une enveloppe externe thermoplastique et d'une garniture est réalisé par le dispositif de cuisson-coextrusion 5. Ce boudin encore à l'état thermoplastique, après avoir été éventuellement aplati, est dirigé vers le dispositif de découpe par la bande transporteuse.

Alors, le boudin est découpé par matriçage entre une empreinte mâle et une empreinte femelle. La découpe longitudinale s'effectuant sans que la ligne de cisaillement constituée par les deux lignes d'arêtes ne pénètre dans la garniture, la garniture ne peut s'écouler hors du boudin. La découpe du boudin en segments, réalisée perpendiculairement, génère une boutonnière dans l'enveloppe externe puisque la ligne de cisaillement pénètre dans la garniture. Mais, cette boutonnière est d'une ouverture très limitée qui n'entraîne pas d'écoulement de la garniture hors de son enveloppe.

Sur la Fig.5, les lignes de découpe, tant longitudinale que perpendiculaire, sont indiquées sous la forme de lignes pointillées, les lignes de découpe longitudinale étant référencées L et les lignes de découpe perpendiculaire étant référencées P.

Dans le même temps le boudin étant comprimé entre les empreintes mâle et femelle, sa surface externe, constituée par l'enveloppe 1 thermoplastique, prend la forme de ces empreintes en moulant ainsi l'enveloppe selon une forme d'os. Plus particulièrement, lors de la découpe perpendiculaire, il est réalisé une légère compression de la garniture qui tend à déformer l'enveloppe thermoplastique externe, au niveau des deux extrémités du segment formé, enveloppe qui vient donc se plaquer contre les empreintes mâle et femelle. Ainsi, même si au départ le boudin présente deux nervures latérales, ces deux nervures disparaissent quand les deux têtes de l'os sont formées. Par ailleurs, comme on le voit sur la Fig.1, la garniture, lors de la découpe perpendiculaire tend à se dilater radialement en engendrant ainsi une garniture qui est plus large au niveau des têtes de l'os final que dans le corps tubulaire de ce dit os.

Il est ainsi obtenu un aliment pour chiens en forme d'os dont les qualités nutritives peuvent être modifiées à volonté en fonction de la composition de la garniture et qui présente une enveloppe externe croustillante et une garniture interne moelleuse.

Les cylindres 9 et 10 poursuivent leur rotation, les empreintes mâle et femelle se séparant alors que les chutes générées par la découpe sont éliminées. Le produit final encore prisonnier dans l'empreinte femelle est ensuite expulsé par injection d'air comprimé par les orifices 111. Cette expulsion par injection d'air a par ailleurs comme avantage de fixer, par le refroidissement qu'elle entraîne, la forme du produit qui a alors perdu tout caractère thermoplastique.

## Revendications

1. Procédé pour la réalisation d'un aliment pour chiens en forme d'os dans lequel un boudin, constitué d'une enveloppe (1) externe en pâte alimentaire, à base de céréales, et d'une garniture interne (2), est produit par cuisson-coextrusion puis, alors que l'enveloppe (1) est encore thermoplastique, ledit boudin est découpé longitudinalement de telle manière que l'outil de coupe ne pénètre pas dans la garniture (2), le boudin étant par ailleurs découpé en segments perpendiculairement à sa longueur et simultanément moulé.

2. Procédé selon la revendication 1 dans lequel le boudin est constitué d'une enveloppe externe (1) présentant un corps central (3) et deux nervures latérales (4), le corps central (3) contenant la garniture (2).

3. Procédé selon selon la revendication 2 dans lequel la découpe longitudinale est réalisée dans les nervures latérales (4).

## Claims

1. Process for preparing a food for dogs in the shape of a bone, wherein a sausage, consisting of an outer envelope (1) made of edible paste, based on cereals, and an inner filling (2), is produced by cooking-coextrusion and then while the envelope (1) is still thermoplastic, the said sausage is cut longitudinally so that the cutting tool does not enter the filling (2), the sausage also being cut into segments perpendicularly to its length and simultaneously moulded.

2. Process according to claim 1, wherein the sausage consists of an outer envelope (1) having a central body (3) and two lateral ribs (4), the central body (3) containing the filling (2).

3. Process according to claim 2, wherein longitudinal cutting is carried out in the lateral ribs (4).

## Patentansprüche

1. Verfahren zur Herstellung eines knochenförmigen Hundefutters, worin ein Strang, bestehend aus einer Außenhülle (1) aus einem Nahrungsmittelteig auf Getreidebasis und einer Innenfüllung (2), durch Koch-Coextrusion ausgebildet wird und hierauf dieser Strang, während die Hülle (1) noch thermoplastisch ist, in Längsrichtung derart zugeschnitten wird, daß das Schneidwerkzeug nicht in die Füllung (2) eindringt, wobei der Strang überdies senkrecht zu seiner Länge zu Abschnitten zerschnitten und gleichzeitig geformt wird.

2. Verfahren nach Anspruch 1, worin der Strang aus einer Außenhülle (1) besteht, die einen Mittelkörper (3) und zwei Seitenrippen (4) aufweist, wobei der Mittelkörper (3) die Füllung (2) enthält.

3. Verfahren nach Anspruch 2, worin der Längszuschnitt in den Seitenrippen (4) vorgenommen wird.
